# EUROPEAN PATENT APPLICATION

(11) **EP 2 544 470 A1**
(43) Date of publication of application: **09.01.2013**
(21) Application number: 12174697.8
(22) Date of filing: 03.07.2012
(51) Int. Cl.: H04W 4/02, H04W 4/00

(54) **Triggering with QoS parameters**

(30) Priority: 04.07.2011 EP 11172510
(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Norp, Antonius, 2584 EN The Hague (NL)
(74) Representative: Wuyts, Koenraad Maria

(57) **Abstract**

The invention relates to a method and system for triggering at least one terminal to establish a communication path between the terminal and a server, the communication path including at least one data connection. The method includes transmitting a trigger message to the terminal, the trigger message including connection information indicating a first type of the data connection.

## Description

### FIELD OF THE INVENTION

Generally, the invention relates to the field of data communication. More specifically, the invention relates to the field of data communication between a terminal and an application server, for example for machine-to-machine (M2M) communication.

### BACKGROUND OF THE INVENTION

In existing data transfer environments, devices (also called "terminals") are sometimes required to transmit data to servers over the network, and vice versa. The establishment of data connections in fixed and mobile networks is, generally, device-originated. For example, Packet Data Protocol (PDP) context, which represents one type of data connection in GSM and UMTS networks, is set up by user terminals. Also most IP middle boxes, like firewalls and Network Address Translators, rely on initiation of a data session by the device.

Such devices may be applied in the field of machine-to-machine (M2M) communication as currently being standardized in 3GPP (see e.g. TS 22.368). While in many M2M applications it is sufficient that the M2M device initiates establishment of a communication path between the M2M device and the M2M server, there are also applications where the M2M server is required to be able to initiate the data connection.

An example of an M2M server initiating communication with the device is a smart electricity metering application. Normally, the meter may report meter readings at the end of every month. But when e.g. a customer changes to a different electricity provider, the M2M server needs to be able to trigger the meter to request the meter readings at the specific end-of-contract date.

To set up a connection from the server side, the server needs to inform the device that the device should set up a connection. This process is called triggering. There are different methods of triggering which all have in common the fact that the trigger merely provides a request to the device to set up a connection to a server, possibly indicating an address of the server (e.g. APN, IP address or FQDN), if the address of the server for the communication path that the device has to set up was not pre-configured in the terminal.

When the device receives a trigger, it will set up a best effort data connection or whichever data connection the device is preconfigured to set up. If the server needs another type of connection (e.g. a video connection for a camera surveillance system), then the server will communicate to the device, over the already set up data connection, that the device needs to establish a data connection of a different type. After that the device will establish the type of the data connection that the server requested.

### SUMMARY OF THE INVENTION

It is an object of the invention to provide improved methods and systems for establishing a server-initiated communication path between a terminal and a server.

To that end, a method for triggering at least one terminal to establish a communication path between the terminal and a server is disclosed. The communication path includes at least one data connection. The method includes transmitting a trigger message to the terminal, the trigger message including connection information indicating a first type of the data connection for establishing the communication path between the terminal and the server.

As used herein, the term "communication path," in context of a terminal setting up a communication path to a server, refers to a path or a channel for communicating data (typically, user data) between the terminal and the server, at least part of which includes at least one data connection, typically between the terminal and some intermediate network node such as a network gateway, over which the terminal and the network gateway can exchange data according to one or more protocols such as e.g. PDP context or UMTS bearer described in 3GPP TS 23.060 or EPS bearer described in 3GPP TS 23.401. Persons skilled in the art will recognize that the term "network gateway" refers to an intermediate network node adapted to function as a gateway between a mobile network and an external packet data network such as e.g. internet or corporate packet data network. In existing GPRS/UMTS networks, the Gateway GPRS Support Node (GGSN) acts as the network gateway, while in LTE network, the PDN Gateway (P-GW) node is the network gateway.

Persons skilled in the art will further recognize that it is, typically, the data connection between the terminal and the network gateway that the terminal sets up according to a set of parameters depending on what type of communication is required between the terminal and the server. The set of parameters, commonly referred to in the art as "QoS parameters" or "QoS profile," include parameters such as e.g. maximum bitrate, guaranteed bitrate, allocation set up, time out limit, and queue configuration. Some examples of the types of data connections include a best effort connection, a conversational connection, or a streaming connection. For different types of data connection, different sets of QoS parameters are required. For example, a conversational data connection may have strict requirements as to the delay and jitter in order to enable voice communication, while in a streaming connection the delay may be not so important.

Thus, the data connection between the terminal and the network gateway may be viewed as a "tunnel" set up between the terminal and the gateway. When the server (or some other entity outside of the tunnel, i.e. in the external data packet network) then needs to send an IP packet to the terminal, the server would use an IP address that is routed to the network gateway. From there, the IP packet is "tunnelled" through the data connection, to the terminal. Vice versa, when routing IP packets from the terminal to entities in the external network, the IP packets are "tunnelled" through the data connection from the terminal to the network gateway without the need to know IP addresses of intermediate nodes in the tunnel. The overall communication path between the terminal and the server may include one or more of such "tunnels." Then, between the network gateway and the server, a conventional IP routing of the Packet Data Network may be used.

Of course, embodiments are possible where the entire communication path between the terminal and the server may be a "tunnel" in that the entire communication path may need to be set up according to some set of parameters defining the type of data connection (i.e., the "at least one data connection" recited in claim 1 is actually the entire communication path between the terminal and the server). Also embodiments are possible where there is a concatenation of tunnels, e.g. one tunnel from the terminal to the network gateway and another tunnel from the gateway to the server. In such embodiments, QoS parameters in both tunnels may either be derived from same QoS indication or there may be different QoS indications. In one particular implementation, the tunnel between the network gateway and the server (and the associated QoS parameters) would not necessarily be set up by providing indication of the type of this tunnel in a trigger message. All of such embodiments are also included within the scope of the present invention and it is understood that a person skilled in the art would recognize what set of parameters (i.e., not necessarily the QoS parameters described above) would be the most appropriate in specifying the type(s) of such data connection(s).

In contrast, trigger messages do not require a "data connection" between the terminal and the server set up according to a particular set of QoS parameters in the manner defined above.

It has been realised that the current state of the art provides merely a reactive system, in which there is no way how a server can influence what kind of data connection the device will initially set up. However, as the technology and the various applications develop, inherently more versatile types of data connections are required and supported by the terminals. For example, a video surveillance application would need bearers that have a suitable QoS for a video stream.

Thus, it will become more frequent that the type of data connection initially set up by the terminal will not be the correct one. Setting up data connections that are not of the correct type and later need to be changed wastes system's processing resources and communications' bandwidth. In applications where a server communicates with thousands or millions of devices, such a waste can eventually become significant and noticeable. Embodiments of the present invention are intended to mitigate or prevent this situation by providing information to the terminal as to what type of connection the terminal should establish early on, in the trigger message, before the terminal sets up a communication path including that data connection. Doing so avoids the terminal setting up a wrong type of data connection and allows significantly decreasing the number of messages exchanged between the server and the terminal, thereby preserving processing resources of the system and reducing inefficient bandwidth usage.

In various embodiments, the connection information could include e.g. part or all of a QoS profile or a QoS Class Identifier (QCI). The QCI could be in the form of a number that indicates which set of QoS parameters should be used for setting up a data connection. For example, a QCI equal to 1 may imply all QoS parameters needed for a conversational type of data connection. An advantage of using QCI is that it is much smaller than the QoS profile and, therefore, is much easier to transport in a trigger message. The QCI is particularly advantageous for applications where the trigger message is sent over a broadcast channel. Of course, other examples of information which could be indicative of the type of connection (i.e. of the range of QoS parameters of the requested data connection or whether a Circuit Switched or Packet Switched connection is used) could be envisioned and are within the scope of the present invention.

The disclosed solution is, although not being limited to this field, especially advantageous for M2M communications because M2M communications typically involves hundreds, thousands or millions of terminals. An example involves collecting information by a server from e.g. smart electricity meters at the homes of a large customer base. Other examples include surveillance systems, sensors, etc. that can be equipped with communication modules that may support various types of advanced data connections to a server. Also, mobile navigation terminals and payment terminals are examples of M2M applications. The presented solution provides for efficient server-based initiation of establishing a communication path between the terminal and the server for such applications.

In one embodiment, the trigger message may further include timing information indicating when the communication path between the at least one terminal and the server is to be established. Such an embodiment could be particularly useful when a batch of devices is triggered at once, e.g. by using group addressing or by broadcasting the trigger message over a plurality of base stations, the terminals being located in the coverage area of these base stations. In such a situation, it may become important that not all devices react to the trigger message at once, but that the process of setting up communication paths between the server and each of the devices is spread out over time.

In various embodiments, the timing information could include one or more of a time delay, a time window, and an instruction to randomly select time for establishing the communication path between the terminal and the server.

In other embodiments, a server and a terminal for use in the above methods are also disclosed.

Still further, an intermediate network node configured for use in the above methods and/or with the above terminal is disclosed. Such an intermediate network node could be communicatively connected to the terminal and the server, either directly or via other intermediate nodes, and the trigger message generated at the server could be sent to the intermediate network node before being transmitted by the node to the terminal. Such an intermediate network node could be a network gateway for communicating user data between the terminal and the server, such as e.g. GGSN or P-GW nodes described above, or it could be a network gateway for communicating control data, such as e.g. a machine-type communication gateway (MTC GW), described in greater detail below.

In the embodiments where the server is configured to implement the methods described above (i.e., the server is configured to include the connection information in the trigger message), the intermediate network node may be configured to determine whether the first type of data connection is supported by the terminal and/or allowed for the terminal. Upon positive determination, the intermediate network node may be configured to transmit the trigger message further, to the terminal. Upon negative determination, the intermediate network node may be configured to update the trigger message by replacing the information indicating the first type of data connection with information indicating a second type of data connection. Alternatively, upon negative determination, the intermediate network node may be configured to stop the transmission of the trigger message to the terminal, possibly informing the server to that effect. Such functionality could ensure that trigger messages provided to the terminal include requests for only the type of data connection that is actually supported by and/or allowed for the terminal, according e.g. to terminal's subscription.

In the embodiments where the server may be a server configured to send a trigger message without including connection information according to the present invention, the intermediate network node may be configured to implement the methods described herein by adding the connection information and, optionally, the timing information to the trigger message received from the server. This could be beneficial because the intermediate network node could be the entity that has information as to what types of data connections are supported by and allowed for the terminal, according e.g. to terminal's subscription.

In various embodiments, more than one intermediate network node may be used to transmit trigger messages. For example, in one embodiment a trigger message may first be transmitted from a server to a first intermediate network node, such as e.g. a control plane gateway, and then transmitted from the first intermediate network node to a second intermediate network note, such as e.g. a user plane gateway, before being transmitted to the terminal. Such embodiments could be advantageous in case an earlier established data connection can be used to transport the trigger message. Furthermore, it may enable entities (e.g. SGSN, S-GW, MME, GGSN, P-GW) involved in the subsequent set up of the data connection to already prepare on the basis of information in the trigger message.

Also, the present disclosure relates to a computer program with portions (possibly distributed) for performing the various functions described herein, to a data carrier for such software portions and to a telecommunications system comprising at least a server and a terminal as described above.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a schematic illustration of a 4G telecommunications network connecting terminals to an application server;
FIG. 2 is a schematic illustration of establishing a server-initiated communication path between a server and a terminal, the communication path comprising a data connection of a specific type, according to prior art;
FIGS. 3A-3F are schematic illustrations of providing a trigger message for establishing a communication path comprising at least one data connection of a specific type, according to various embodiments of the present invention;
FIG. 4 provides an exemplary illustration of how various trigger messages may be transmitted to a terminal via a control plane gateway, according to embodiments of the present invention.
FIGS. 5-9 provide schematic illustrations of various triggering mechanisms suitable for implementing embodiments of the present invention.

### DETAILED DESCRIPTION OF THE DRAWINGS

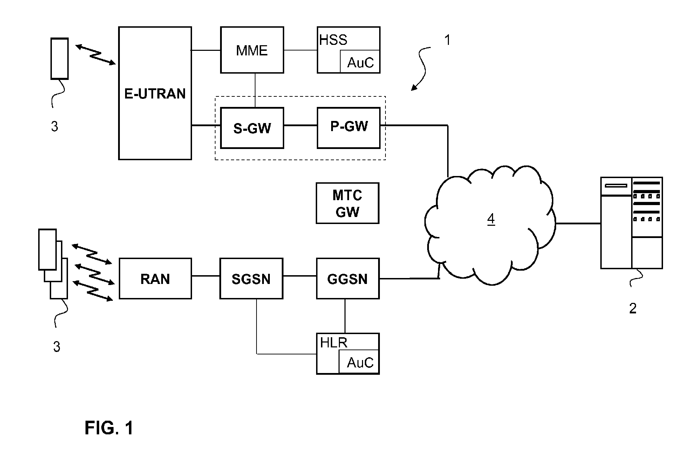

FIG. 1 shows a schematic illustration of a telecommunications network 1. The telecommunications network 1 allows data sessions between a server 2 and a terminal 3 over a data network 4, wherein access of the terminal to the telecommunications network 1 is wireless.

In the telecommunications network of FIG. 1, three generations of telecommunications networks are schematically depicted together for purposes of brevity. A more detailed description of the architecture and overview can be found in 3GPP TS 23.002 which is included in the present application by reference in its entirety.

The lower branch of FIG. 1 represents a GPRS or UMTS telecommunications network comprising a GGSN, a Serving GPRS Support Node (SGSN) and a Radio Access Network (RAN). For a GSM/EDGE radio access network (GERAN), the RAN comprises a Base Station Controller (BSC) connected to a plurality of Base Station Transceivers (BTSs), both not shown. For a UMTS radio access network (UTRAN), the RAN comprises a Radio Network Controller (RNC) connected to a plurality of NodeBs), also not shown. The GGSN and the SGSN are conventionally connected to a Home Location Register (HLR) that contains subscription information of the terminals 3. In the figure, the HLR is combined with an authentication centre (AuC) for authenticating terminals 3 in the network.

The upper branch in FIG. 1 represents a next generation telecommunications network, commonly indicated as Long Term Evolution (LTE) or Evolved Packet System (EPS). Such a network comprises a P-GW and a Serving Gateway (S-GW). The E-UTRAN of the LTE network comprises evolved NodeBs (eNodeBs or eNBs) providing wireless access for a terminal 3 that is connected to the S-GW via a packet network. The S-GW is connected to a Home Subscriber Server HSS and a Mobility Management Entity MME for signalling purposes. The HSS includes a subscription profile repository and an authentication centre (AuC). Further information of the general architecture of an LTE network can be found in 3GPP TS 23.401.

The GGSN node of the GPRS and UMTS networks and the P-GW node of the LTE network act as user plane gateways between a mobile network and the external data network 4, providing functions such as e.g. QoS policy enforcing, usage metering, and IP address allocation. All of the networks illustrated in FIG. 1 may also, optionally, include a control plane gateway, such as e.g. a MTC GW currently being standardized. A control plane gateway is intended to act as an entry point in the mobile network for control messages from the servers. The purpose of the control plane gateway is, typically, to protect the network from unauthorised control messages, or control messages sent by unauthorised servers. The control plane gateway may be pre-provisioned in the server, in case the server only communicates with one network operator. Otherwise, the server first needs to determine to which operator a control message such as the trigger message described in the present invention needs to be sent to. Based on the Device ID, Group ID or IMSI, the server should be able to find the correct mobile operator network.

Of course, functionality of a user plane gateway and a control plane gateway could be combined in a single node or distributed among a larger number of nodes than illustrated in FIG. 1.

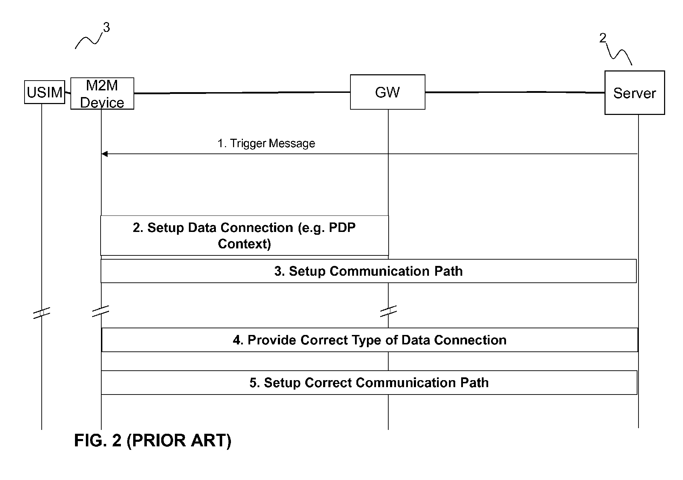

FIG. 2 is a schematic illustration of establishing a server-initiated communication path between a server and a terminal, the communication path comprising a data connection of a specific type, according to prior art. As shown in FIG. 1, in step 1, the server 2 initiates the set up of a connection between the terminal 3 and the server 2 by triggering the terminal 3.

In an M2M environment, a single server 2 normally is used for communication with a large number of terminals 3. Individual terminals 3 can be identified by individual identifiers, such as an IP address, an International Mobile Subscriber Identity (IMSI) or another terminal identifier. In FIG. 2, the terminal 3 is represented as comprising an M2M device and (U)SIM.

In step 2, a particular type of data connection between the terminal and the network gateway, such as e.g. PDP context, may be set-up, and, in step 3, a communication path between the terminal 3 and the server 2 may be established, the communication path including the data connection between the terminal and the network gateway. The terminal 3 and the server 2 may then exchange data via the established communication path. According to prior art, the server 2 will then use the established communication path to inform the terminal 3, in step 4, that a different type of data connection is required in the communication path between the terminal 3 and the server 2. In step 5, the terminal 3 will establish a communication path comprising the data connection requested by the server 2 (provided the terminal 3 supports the type of data connection and is allowed to set up the type of data connection requested by the server). The correct communication path is established by modifying the existing data connection with the correct type of the data connection requested by the server or by generating a new data connection of the correct type.

Again, while FIG. 2 illustrates that a data connection of a particular type is set up between the terminal and the network gateway, in other embodiments, such a data connection may be set up between the terminal and the server (i.e., the entire communication path between the terminal and the server may be a data connection of a particular type specified by certain parameters).

The present invention is developed from the insight that providing the information indicating the required type of data connection within the communication path before the data connection/communication path has been set up by including that information in the trigger message would avoid the waste of system resources by setting up a wrong type of connection and then having to correct it.

It is noted that in the art, M2M terminals typically include devices like parking meters and vending machines for which there is no need to establish some special type of data connection in the communication between the terminal and the server. In such cases there has been no need for the server to influence the type of the data connection that the device would set up. The problem underlying the present invention is therefore mainly unnoticed.

Furthermore, until most recently, specifying the type of connection to be established involved providing to the terminal a particular QoS profile according to which the connection should be set up. Attaching such a QoS profile to a trigger message would make the trigger message large and cumbersome and, therefore, not practically feasible, especially if the trigger message at some stage has to be sent over a broadcast channel. This provides a strong bias against including information specifying the desired QoS profile in a trigger message.

However, the present invention is based on the recognition that, as the technology develops, more and more different types of data connections will have to be used and that the burden of spending system's resources on setting up wrong type of data connection will start to outweigh an increase in the size of the trigger message.

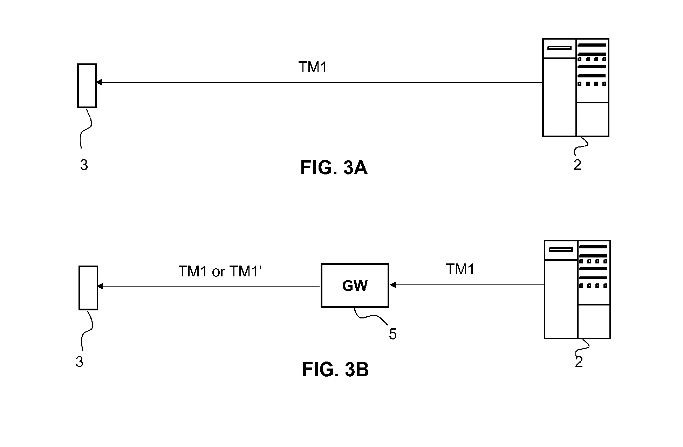

FIGS. 3A-3F are schematic illustrations of providing a trigger message for establishing a communication path comprising at least one data connection of a specific type, according to various embodiments of the present invention. For clarity reasons only the relevant steps of transmitting a trigger message are depicted in FIGS. 3A-3F. Other procedures, e.g. the ones associated with the actual set up of the data connection and exchange of user data, are not included. Thus, FIGS. 3A-3F illustrate how step 1 of FIG.2 is performed differently according to the embodiments of the present invention, which, in turn, allows performing steps 2 and 3 illustrated in FIG. 2 more efficiently and allows eliminating steps 4 and 5 of FIG. 2.

As shown in FIG. 3A, in one embodiment, the server 2 may be configured to generate a trigger message TM1 and transmit it directly to the terminal 3. To that end, the server 2 may include a processing unit for generating trigger messages and a communications module for transmitting trigger messages.

In the context of the server directly transmitting the trigger message to the terminal, the term "directly" is used only to differentiate the embodiment illustrated in FIG. 3A from the embodiments illustrated in FIGS. 3B-3F where the trigger message generated by the server 2 is transmitted through and, possibly, further processed by one or more intermediate network nodes. Thus, in the embodiment illustrated in FIG. 3A the trigger message may be transmitted to the terminal 3 via entities other than the intermediate nodes described in FIGS. 3B-3F, such as e.g. a Cell Broadcast Centre (CBC), or SMS Service Centre (SMS-SC).

The trigger message TM1 is formed by including at least connection information specifying the type of at least one data connection that the server 2 needs the terminal 3 to set up as a part of the terminal 3 establishing a communication path between the server 2 and the terminal 3. The connection information could include e.g. a complete or partial QoS profile, a QCI, or some other information that can adequately identify a particular type of data connection.

The trigger message TM1 could also include information that is typically included in conventional trigger messages, such as the identity of the terminal 3, the identity of the application, and/or a request counter associated to this request allowing to detect duplicated requests, to correlate requests with their acknowledgement and to allow the application to cancel a request. The trigger message TM1 may also, optionally, include the IP address (or Fully Qualified Domain Name) and/or port numbers of the application server 2 with which the terminal 3 is triggered to establish a data connection, an urgency request indication, a validity timer allowing to remove triggers that are stored in the network when the terminal 3 cannot be reached (e.g. with SMS), the area where triggering needs to be sent, and/or a limited amount of application specific information (e.g. to instruct the terminal 3 to do something before establishing a data connection with the server 2).

Upon receiving the trigger message TM1, the terminal 3 is configured to obtain the connection information from the message and establish a communication path to the server 2, the communication path comprising the data connection of the type specified in the message. To that end, the terminal 3 may include a processing unit capable of extracting the connection information from the trigger message and a communications module for establishing the requested type of data connection. At least part of the functionality of the processing unit and/or the communications module of the terminal 3 may be included within a (U)SIM within the terminal 3.

FIG. 3B illustrates that an intermediate network node 5, such as e.g. GGSN, P-GW or MTC GW, may be included in the communication path between the server 2 and the terminal 3. The intermediate node 5 is communicatively connected to the server 2, either directly or via other intermediate nodes, in that the intermediate node 5 can receive the trigger message TM1 from the server 2 (over the external network 4). The intermediate node 5 is also communicatively connected to the terminal 3, either directly or via other intermediate nodes, in that the intermediate node 5 can transmit the trigger message further to the terminal 3, over the mobile network.

The trigger message TM1 transmitted by the server 2, the server 2, and the terminal 3 illustrated in FIG. 3B are analogous to those illustrated in FIG. 3A and, therefore, their discussion is not repeated here.

The intermediate node 5 could be configured to obtain the connection information from the received trigger message TM1 and check whether the particular QoS profile identified by the connection information is supported by the terminal 3 and/or allowed by the subscription of the terminal 3. This may be done by e.g. checking with HSS containing subscriber's information.

If the intermediate node 5 determines that the type of connection identified in TM1 is supported by and allowed for the terminal 3, the intermediate node 5 may transmit the trigger message TM1 further, to the terminal 3. Otherwise, the intermediate node 5 may either stop the transmission of the trigger message to the terminal 3 (possibly communicate to the server 2 that the transmission of the trigger message TM1 has been interrupted) or overwrite the connection information in TM1 specifying the type of data connection requested by the server 2 with the most appropriate connection information specifying the type of data connection that would be supported by and allowed for the terminal 3. In the latter case, the intermediate node 5 would then transmit an updated trigger message TM1' to the terminal 3, the updated message including updated connection information.

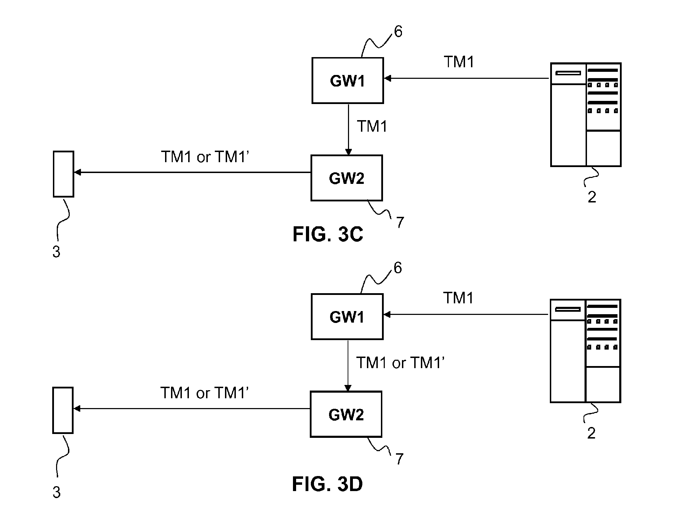

FIG. 3C illustrates that more than one intermediate network nodes may be included in the communication path between the server 2 and the terminal 3. FIG. 3C illustrates a first intermediate node 6 and a second intermediate node 7. The first intermediate node 6 is communicatively connected to the server 2, either directly or via other intermediate nodes, in that the intermediate node 6 can receive the trigger message TM1 from the server 2. The first intermediate node 6 is also communicatively connected to the intermediate node 7, either directly or via other intermediate nodes, in that the intermediate node 6 can transmit the trigger message further to the node 7. The intermediate node 7 is communicatively connected to the terminal 3, also either directly or via other intermediate nodes, in that it may, in turn, transmit the trigger message further to the terminal 3.

The trigger message TM1 transmitted by the server 2, the updated trigger message TM1', the server 2, and the terminal 3 illustrated in FIG. 3B are analogous to those illustrated in FIG. 3C and, therefore, their discussion is not repeated here. FIG. 3C differs from FIG. 3B in that two intermediate network nodes are used instead of one, where the first intermediate network node 6 transmits the trigger message TM1 to the second intermediate network node 7 which then is configured to check whether the type of data connection requested by the server 2 is supported and/or allowed by the terminal 3. That functionality of the intermediate node 7 is then analogous to that of the intermediate node 5 illustrated in FIG. 3B and, in the interests of brevity, is not repeated here.

A configuration illustrated in FIG. 3C could be advantageous where the first intermediate node 6 is configured to check whether the server 2 is authorised to send messages to the network and to check whether the server 2 is only sending messages it is authorised to send.

In one embodiment, the first intermediate node 6 could include a control plane gateway, such as e.g. MTC GW, while the second intermediate node 7 could include a user plane gateway, such as e.g. P-GW.

FIG. 3D differs from FIG. 3C in that it is already the first intermediate network node 6 that performs the checking of the connection information included by the server 2 in the trigger message TM1, similar to that of the intermediate node 5 illustrated in FIG. 3B. For example, in one embodiment, the intermediate node 6 may comprise HSS, which then may modify QoS information in the received trigger message TM1 based on the subscription information for the terminal 3 and forward the updated trigger message TM1' to the intermediate node 7 which then sends it to the terminal 3. This could be particularly beneficial for triggering via HSS and NAS signalling.

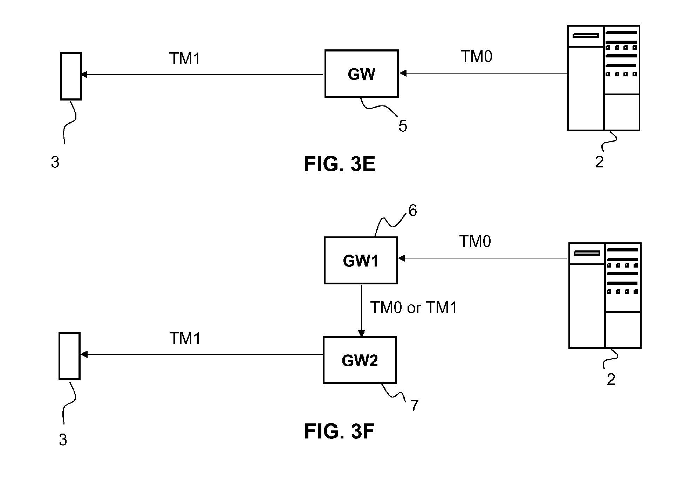

FIGS. 3E and 3F illustrate embodiments where the server 2 does not include the connection information in the trigger message, but where it is some intermediate network node that includes the connection information into the trigger message transmitted to the terminal 3.

In FIG. 3E, the server 2 transmits a trigger message TM0 to the intermediate node 5, such as e.g. GGSN, P-GW, or MTC-GW described above. The trigger message TM0 could be e.g. a conventional trigger message (i.e. TM0 does not include the connection information). The intermediate node 5 is then configured to add the connection information to the trigger message, thus generating a new trigger message TM1, and transmit the trigger message TM1 with the connection information to the terminal 3. The discussions provided above with respect to the trigger message TM1 are also applicable here and, therefore, are not repeated.

Similar to the functionality of the intermediate node 5 described in association with FIG. 3B, the intermediate node 5 illustrated in FIG. 3E may be configured to first determine which type of connection is supported by and allowed for the terminal 3 and, possibly, the server 2, before inserting appropriate connection information into the trigger message TM1. For example, the intermediate node 5 may comprise a MTC GW configured to check with HSS to see what the default QoS profile for the subscription of the terminal 3 is and insert the appropriate QoS identification in the subsequent trigger signalling.

FIG. 3F differs from FIG. 3E in that two intermediate nodes are used, similar to the intermediate nodes described in FIGS. 3C and 3D. In the embodiment illustrated in FIG. 3F, either the first intermediate node 6 or the second intermediate node 7 can include the connection information into the trigger message, similar to how it is done by the intermediate node 5 illustrated in FIG. 3E. For example, in one embodiment, the intermediate node 6 may comprise HSS, which then adds QoS information based on the subscription information for the terminal 3. HSS then forwards the trigger message TM1 to the intermediate node 7 which then sends it to the terminal 3. This could be particularly beneficial for triggering via HSS and NAS signalling.

In all of the embodiments illustrated in FIGS. 3A-3F, the trigger message may further include timing information specifying the time at which the terminal 3 should start establishing the communication path with the server 2. Since the communication path includes the data connection, the timing information specifies when the terminal 3 should start setting up the data connection of the particular type specified in the trigger message. In response to receiving the trigger message with the timing information, the terminal 3 would delay establishing the communication path/data connection until a time that the terminal 3 determines on basis of the timing information.

In one embodiment, the timing information could be included in the trigger message in the form of a delay time, e.g. instructing the terminal 3 to delay establishing of the communication path/data connection by one hour (measured e.g. from the time of receipt of the trigger message or from the time stamp indicating when the trigger message was sent by the server 2). For example, the timing information may instruct the terminal 3 to establish the communication path after a delay of 75 seconds or after a delay of 13 min 15 seconds (i.e., the timing information would specify the delay exactly, up to the couple of seconds).

The timing information could also instruct the terminal 3 to establish the communication path at 07:35:35 (i.e. at some specific time).In another embodiment, the timing information could be in the form of a time window, e.g. instructing the terminal 3 to establish the communication path/data connection between 16:00 and 17:00 or in a smaller time window, between 03:45:15 and 03:45:45.

In yet another embodiment, the timing information could instruct the terminal 3 to select the time at which to establish a communication path/data connection at random. This embodiment may be particularly beneficial in situations when the trigger message is sent to a group of terminals, e.g. using group addressing, where each terminal would randomise the time of response to the trigger message.

One or more of the exemplary illustrations of possible types of timing information provided above could be combined with one another. For example, the embodiment of timing information instructing the terminal 3 to select the time at which to establish a communication path/data connection at random could be combined with providing delay time or window time so that e.g. the timing information may instruct the terminal 3 to select some random time in a particular time window (e.g. random time between 02:00 and 04:00) for establishing a communication path/data connection. In another example, the timing information may instruct the terminal 3 to randomize time for establishing the communication path between now and one hour. Alternatively, the timing information providing both a time delay and a time window is possible where the timing information would indicate the delay together with the duration, instructing the terminal 3 to establish the communication path after a delay of e.g. 15 minutes during the time window of 1 hour. Such an embodiment could be beneficial because, unlike providing absolute time indications, providing time delay and time window information does not require synchronization between all nodes concerned (possibly also taking into account time zones and summer time). In yet another example, the timing information may include two delays, e.g. instructing the terminal to establish the communication path from 15 minutes from now until from 30 minutes from now.

The timing information may be used to spread network load when a trigger is sent to a group of terminals (i.e., the terminals may randomize their load) and/or to spread network load when triggers are sent to individual devices (i.e., the server may randomize the loads of the terminals).

Further, the timing information in the trigger message may instruct the terminal 3 to do something before the terminal 3 would start sending its data to the server 2, e.g. to start recording data and send data after 4 days or to record data between July 1st 13:00 and July 4th 15:00 and then send data.

As the foregoing examples illustrates, timing information could relate to times from a few seconds to multiple days.
Other types of timing information indicating at what time the terminal 3 should or should not establish the communication path/data connection may be envisioned and are intended to be within the scope of the present invention.

In various embodiments illustrated in FIGS. 3A-3F, the timing information may or may not be included in the trigger message by the same entity that includes the connection information. For example, in the embodiment of FIG. 3B, it is the server 2 that includes the connection information into the trigger message, but it could be the intermediate node 5 that adds the timing information to that trigger message. In another example, in the embodiment of FIG. 3F, the timing information may be included into the trigger message by the server 2 while the connection information may be added later, by either the intermediate node 6 or the intermediate node 7.

Similar to the server 2 and the terminal 3, each of the intermediate network nodes 5, 6, and 7 illustrated in FIGS. 3B-3F may include a processing unit for generating and processing trigger messages and other data and a communications module for communicating with the terminal, the server, or other nodes and entities.

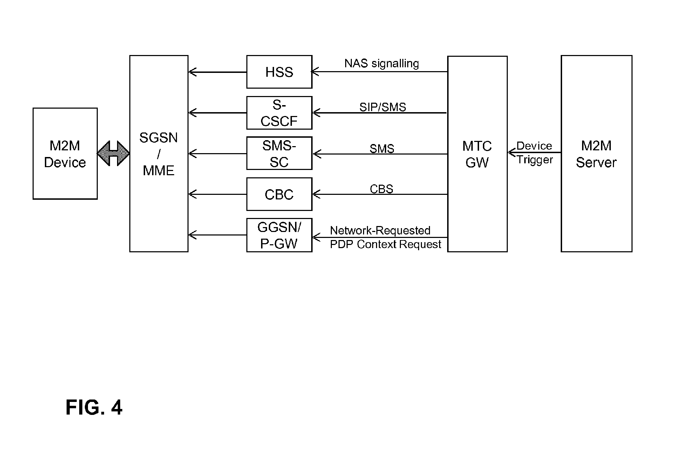

FIG. 4 provides an exemplary illustration of how various trigger messages may be transmitted to a terminal via the control plane gateway, such as e.g. MTC GW, according to various M2M embodiments of the present invention. In FIGS. 4-9, the term "M2M device" is used to identify the terminal 3 described in the remainder of the present description, to point out that these illustrative embodiments are particularly suitable for M2M applications.

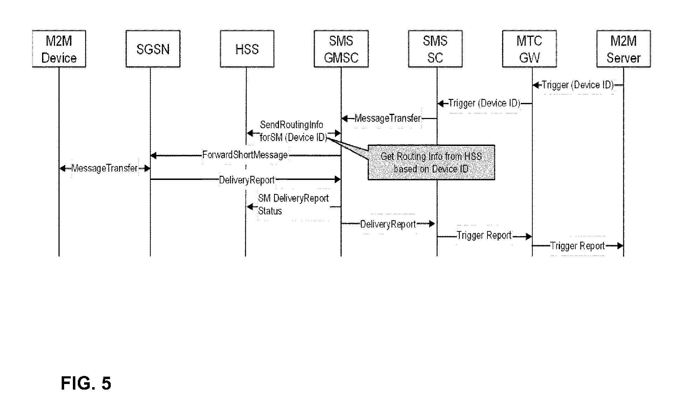

As shown in FIG. 4, from the MTC GW onwards, a number of potential trigger mechanisms exist that could be used in the embodiments of FIGS. 3A-3F. These mechanisms include triggering using mobile terminated SMS, triggering using IMS Message, triggering using cell broadcast, triggering via HSS and NAS signalling, and triggering via Network Requested PDP context establishment, illustrated in greater detail in FIGS. 5-9, respectively.

In one embodiment, the MTC GW may be configured to decide which triggering mechanism to choose, e.g. based on status information from the network. In other embodiments, the M2M server may be the decision point on which trigger method to use. That may be advantageous because the M2M server typically has most knowledge about the particular application, the M2M devices associated with that application, and the kind of triggering mechanisms these devices would support.

In all of the triggering mechanisms illustrated in FIG. 4, the connection information and, optionally, the timing information may be added to the trigger message as described in various embodiments of FIGS. 3A-3F. The various triggering mechanisms are now briefly described in association with FIGS. 5-9, where it is understood that a person skilled in the art would be able to implement one or more of these triggering mechanisms in context of the embodiments of FIGS. 3A-3F.

FIG. 5 illustrates how the trigger message sent by the M2M server is forwarded by the MTC GW to the SMS Service Centre (SMS SC). From there on, the procedure is almost the standard mobile terminated SMS procedure, as described in 3GPP TS 23.040. The main difference is that in normal SMS procedures, a MSISDN is used as the Device Identifier. With M2M communications, either the IMSI or an MSISDN replacement could be used, which implies a change to the SendRoutingInfoforSMS procedure.

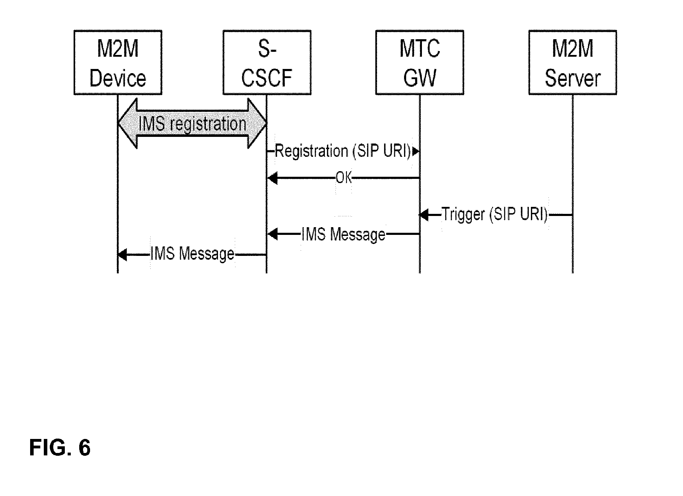

In LTE network, there is no native SMS support and text messaging is implemented using IMS instant messaging. So, where in LTE SMS-based triggering may be difficult, an alternative may be to use SIP Messages. FIG. 6 illustrates how IMS message can be used to trigger a M2M device. First, the M2M device would need to register in IMS, in order to be able to receive IMS Messages. The MTC GW is seen as an IMS Application Server and the registration of M2M devices in the S-CSCSF is forwarded to the MTC GW. When a trigger message is received by the MTC GW, the MTC GW transmits a SIP Message towards the M2M device via the ISC interface with the S-CSCF.

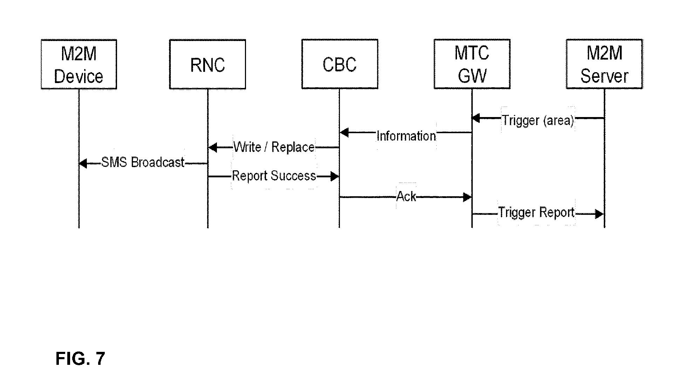

FIG. 7 illustrates triggering using cell broadcast. The assumption behind this solution is that the M2M server has the information as to the area where the M2M device is located. A trigger request with the area is sent to the MTC GW, which forwards it to the Cell Broadcast Centre (CBC). From here on, standard procedures of cell broadcast as described in 3GPP TS 23.041 may be used to broadcast the trigger message within the indicated area. The M2M device listens to the broadcast messages. First the M2M device will determine which broadcast messages are trigger messages. Trigger messages may be identified for example by the broadcast channel identifier or through a specific formatting of the broadcast message. The M2M device may interpret the receipt of any trigger message as a trigger and set up a connection to the M2M server. Alternatively, the M2M device first determines if there is a match between the identification sent in the trigger message and the identification of the M2M device, and, upon a positive match, set up a connection to the M2M server.

The identification used in the trigger message may be any application level identifier and may be completely transparent to the mobile network. For example, a smart metering application could use serial numbers of the electricity meters. The identification in the trigger message may also identify a group of M2M devices. This allows for an efficient way to trigger a batch of M2M devices to do e.g. a software upgrade. In such a case, including also the timing information within the trigger message, as described in the present invention, could allow spreading the response to the trigger message out in time and mitigating or preventing that a too large group of M2M devices will try to connect to the M2M server simultaneously.

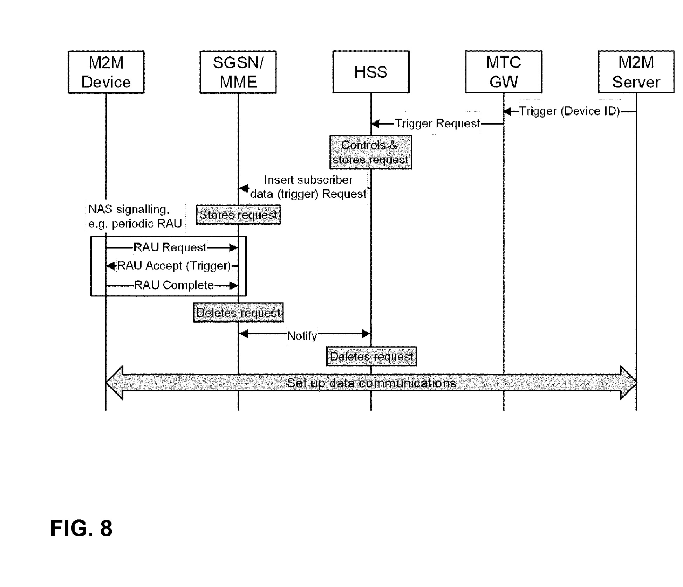

FIG. 8 illustrates a message sequence for triggering using existing Non Access Stratum (NAS) signalling. The idea behind this concept is that the trigger message can be "piggy-backed" by attaching it to the existing signalling messages exchanged between the M2M device and the network. The trigger message is sent via the MTC GW to the HSS. The HSS stores the request and, when the M2M device is attached, sends it in an Insert Subscriber message to the SGSN or MME where the M2M is registered. When the M2M device next signals to the SGSN/MME, e.g. for a periodic routing area update, the SGSN/MME piggy backs the trigger message in the response to the M2M device. When the trigger message is received successfully by the M2M device, the trigger request may be deleted from the SGSN/MME and the HSS. In case the M2M device is not attached, the HSS may store the trigger message until the next time the M2M device attaches to the network again.

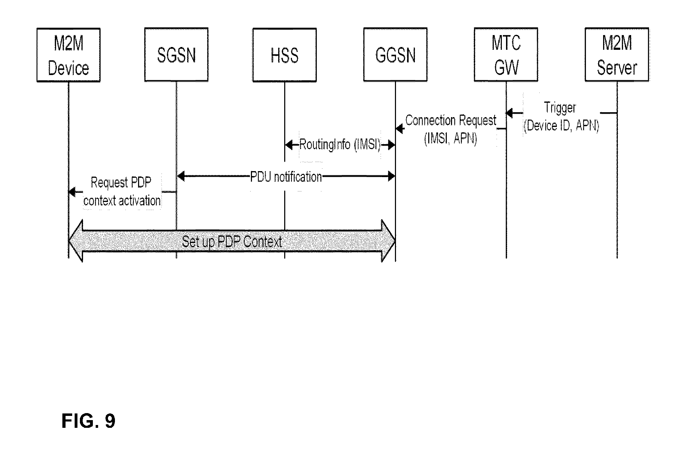

The final of the five trigger mechanisms is illustrated in FIG. 9. The network requested PDP context activation procedure has been specified in 3GPP TS 23.060. The new aspect in this procedure would be the Connection Request from the MTC GW to the GGSN. The existing network requested PDP context activation procedure is not initiated by a signalling message but by the receipt of an IP packet for the device. The RoutingInfo for determination to which SGSN the trigger message should be sent, may be found in the HSS on the basis of the IMSI. It may also be an option to use a new Device ID replacement of the MSISDN to query the HSS.

One embodiment of the invention may be implemented as a program product for use with a computer system. The program(s) of the program product define functions of the embodiments (including the methods described herein) and can be contained on a variety of, preferably non-transitory, computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored. The computer program may be run on the processing units described herein.

## Claims

1. A method for triggering at least one terminal to establish a communication path between the at least one terminal and a server, the communication path comprising at least one data connection, the method comprising transmitting a trigger message to the at least one terminal, the trigger message including connection information indicating a first type of the at least one data connection.

2. The method according to claim 1, wherein the trigger message further includes timing information indicating when the communication path between the at least one terminal and the server is to be established.

3. The method according to claim 2, wherein the timing information includes one or more of a time delay, a time window, and an instruction to randomly select time for establishing the communication path between the at least one terminal and the server.

4. The method according to any one of claims 1-3, wherein the trigger message is transmitted to a plurality of terminals, the plurality of terminals including the at least one terminal.

5. The method according to any one of claims 1-4, wherein the trigger message including the connection information is generated at the server and transmitted to a first intermediate network node before being transmitted to the at least one terminal, the method further comprising:
determining whether the first type of the at least one data connection is supported by the at least one terminal and/or allowed for the at least one terminal; and
upon positive determination, transmitting the trigger message from the first intermediate network node to the at least one terminal.

6. The method according to claim 5, further comprising:
upon negative determination, updating the trigger message by replacing the information indicating the first type of the at least one data connection with information indicating a second type of the at least one data connection, where the second type of the at least one data connection is supported by the at least one terminal and allowed for the at least one terminal; and
transmitting the trigger message from the first intermediate network node to the at least one terminal after the trigger message has been updated.

7. The method according to any one of claims 5 and 6, wherein the trigger message is transmitted from the first intermediate network node to the at least one terminal via a second intermediate network node and wherein, optionally, the first intermediate network node comprises a control plane gateway and the second intermediate network node comprises a user plane gateway.

8. A server comprising means configured for performing the method according to one or more of claims 1-4.

9. A first intermediate network node communicatively connected to a server and to at least one terminal and comprising means configured for performing the method according to one or more of claims 1-7.

10. The first intermediate network node according to claim 9, the first intermediate network node being a control plane gateway or a user plane gateway.

11. A method for a terminal to establish a communication path between the terminal and a server, the communication path comprising at least one data connection, the method comprising:
receiving a trigger message, the trigger message including connection information indicating a first type of the at least one data connection; and
establishing the communication path between the terminal and the server according to the connection information.

12. The method according to claim 11, wherein:
the trigger message further includes timing information indicating when the communication path between the terminal and the server is to be established; and
the communication path between the terminal and the server is established according to the timing information.

13. The method according to claim 12, wherein the timing information includes one or more of a time delay, a time window, and an instruction to randomly select time for establishing the communication path between the terminal and the server.

14. A terminal comprising means configured for performing the method according to one or more of claims 11-13.

15. A system comprising a terminal according to claim 14 and a server according to claim 8.

16. A computer program comprising software code portion configured, when executed by a processor, for performing the steps of at least one of claims 1-7 and 11-13.
